(19) Europäisches Patentamt
European Patent Office
Office européen des brevets

(11) **EP 4 283 422 A1**

(12) **EUROPEAN PATENT APPLICATION**
published in accordance with Art. 153(4) EPC

(43) Date of publication:
**29.11.2023 Bulletin 2023/48**

(21) Application number: **21921142.2**

(22) Date of filing: **14.09.2021**

(51) International Patent Classification (IPC):
**G05B 19/418** (2006.01)   **G06Q 50/04** (2012.01)

(52) Cooperative Patent Classification (CPC):
**G05B 19/418; G06Q 50/04**

(86) International application number:
**PCT/JP2021/033721**

(87) International publication number:
**WO 2022/158037 (28.07.2022 Gazette 2022/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.01.2021   JP 2021009843**

(71) Applicant: **OMRON Corporation
Kyoto 600-8530 (JP)**

(72) Inventors:
• **OTA, Yuya
  Kyoto-shi, Kyoto 600-8530 (JP)**
• **HATTORI, Reiko
  Kyoto-shi, Kyoto 600-8530 (JP)**
• **MIYAMOTO, Mami
  Kyoto-shi, Kyoto 600-8530 (JP)**
• **FUJII, Toru
  Kyoto-shi, Kyoto 600-8530 (JP)**

(74) Representative: **Becker, Eberhard
  Becker Kurig & Partner
  Patentanwälte mbB
  Bavariastraße 7
  80336 München (DE)**

(54) **QUALITY PREDICTION SYSTEM, MODEL-GENERATING DEVICE, QUALITY PREDICTION METHOD, AND QUALITY PREDICTION PROGRAM**

(57)    The present invention reduces costs relating to generation of a model, and suppresses a decrease in the estimating accuracy of the generated model. A quality prediction system of one aspect of the present invention acquires first learning data collected in first manufacturing equipment, acquires second learning data collected in second manufacturing equipment, and in order to implement transfer learning, converts the acquired first learning data to match the second learning data, uses the converted first learning data and the second learning data to implement machine learning of a quality prediction model, uses a trained quality prediction model to specify an adjustment amount for each adjustment item of the second manufacturing equipment so that a quality index predicted for a second product satisfies a quality standard, and outputs the specified adjustment amount of each adjustment item of the second manufacturing equipment.

FIG. 1

EP 4 283 422 A1

**Description**

Technical Field

The present invention relates to a quality prediction system, a model-generating device, a quality prediction method, and a quality prediction program.

Related Art

At manufacturing sites, in order to adjust the quality of products manufactured by manufacturing equipment such as production lines, experiments may be conducted to try manufacturing products while varying the adjustment amount for each adjustment item, and data obtained from the experiments (learning data) may be used to model the relationship between each adjustment item and the quality index. In this case, it is possible to use the obtained model to specify the adjustment amount of each adjustment item for manufacturing a product with a quality index that satisfies the quality standard.

At this time, the man-hours for experiments to obtain data used for modeling may be reduced by limiting the adjustment items that have a large impact on the quality index. For example, Patent Literature 1 proposes a method for efficiently determining design parameters. Specifically, the system proposed in Patent Literature 1 structures the interaction between product functions and design parameters, extracts a design parameter group with less interaction, and creates an experimental plan based on the extracted design parameter group. Then, the proposed system models the degree of quality influence between product functions and design parameters based on the results of experiments conducted according to the created plan, and uses the obtained model to optimize the design parameters. According to this method, the man-hours of experiments for obtaining a model can be reduced, so it is possible to reduce the costs (time, amount of work, and expenses) required to specify the adjustment amount of each adjustment item of the manufacturing equipment.

Citation List

Patent Literature

[Patent Literature 1] Japanese Patent Laid-Open No. 2006-344200

SUMMARY OF INVENTION

Technical Problem

The inventors of the present invention have found that the conventional method proposed in Patent Literature 1 has the following problems. That is, for the conventional method, since the adjustment items that vary the conditions are limited, there is a possibility that the estimating accuracy of the generated model may decrease. Due to this, using a model with low accuracy to determine the adjustment amount for the adjustment item may cause problems such as failure to manufacture a product that satisfies the desired standard.

For example, a basic production line may be duplicated to construct a new production line. In addition, due to changes of the products to be manufactured, replacement of the machines used, revision of manufacturing specifications, changes of the manufacturing conditions, etc., for example, a state change may be added due to any intentional change to the existing production line that has already been constructed. Furthermore, the state change of the manufacturing equipment is not limited to an intentional change, but may be caused by unintended factors such as environmental changes (for example, seasonal fluctuations, etc.) and aged deterioration of constituent devices. In these cases, there is a particularly strong demand to limit the number of experiments to reduce the man-hours for experiments and suppress the costs. However, if the man-hours for experiments are reduced as a result and cause a model with low accuracy to be generated, there is a high possibility that problems will occur in the duplicated production line and the changed production line.

In one aspect, the present invention has been made in view of such circumstances, and the present invention is to provide a technique that reduces the costs relating to generation of a model and suppresses a decrease in the estimating accuracy of the generated model.

Solution to Problem

The present invention adopts the following configurations in order to solve the above-described problems.

That is, a quality prediction system according to one aspect of the present invention includes: a first data acquisition part configured to acquire first learning data which is collected in first manufacturing equipment and indicates a relationship between each adjustment item of the first manufacturing equipment and a quality index of a first product manufactured by the first manufacturing equipment; a second data acquisition part configured to acquire second learning data which is collected in second manufacturing equipment and indicates a relationship between each adjustment item of the second manufacturing equipment and a quality index of a second product manufactured by the second manufacturing equipment; a data transfer part configured to convert the acquired first learning data to match the second learning data to implement transfer learning; a machine learning part configured to implement machine learning of a quality prediction model for predicting the quality index of the second product from the each adjustment item of the second manufacturing equipment, using the converted first learning data and the second learning data; a specifying part configured to specify an adjustment amount of the each adjustment item of the second manufacturing equipment so that the predicted quality index of the second product satisfies a quality standard, using the trained quality prediction model; and an output part configured to output the specified adjustment amount of the each adjustment item of the second manufacturing equipment.

In the configuration, by converting the first learning data (transfer source) obtained in the first manufacturing equipment to match the second learning data (transfer destination) obtained in the second manufacturing equipment, it is possible to increase the number of samples of learning data used for generating the quality prediction model. Thus, even if the number of samples obtained as the second learning data is suppressed, that is, the man-hours for experiments performed in the second manufacturing equipment to obtain the second learning data are reduced, the learning data of a sufficient number of samples for generating the quality prediction model can be secured by transferring the first learning data. Thus, it can be expected to improve the estimating accuracy of the generated quality prediction model (suppress a decrease in estimating accuracy). Hence, according to the configuration, it is possible to reduce the costs for generating the quality prediction model and suppress the estimating accuracy of the generated quality prediction model from decreasing. Further, by using the generated quality prediction model, it is possible to appropriately determine the adjustment amount of the adjustment item of the second manufacturing equipment.

The quality prediction system according to the above aspect may further include a confirmation part configured to confirm whether there is an adjustment item that does not contribute to prediction of the quality index among the each adjustment item by statistically analyzing each sample included in the acquired first learning data and the acquired second learning data. Even with the first learning data transferred, the learning data may be insufficient for obtaining a quality prediction model with favorable estimating accuracy. For example, when the number of samples in which the adjustment amount is changed for a specific adjustment item (that is, the conditions are different) is small for both the first learning data and the second learning data, there is a possibility that the estimating accuracy of the quality prediction model with respect to the specific adjustment item may deteriorate. According to the configuration, it is possible to confirm in advance whether the estimating accuracy of such a quality prediction model decreases, and prevent the occurrence of defects caused by using a quality prediction model with low accuracy.

In the quality prediction system according to the above aspect, the second data acquisition part may be further configured to acquire additional second learning data, which is collected by experimenting manufacturing of the second product by the second manufacturing equipment under a plurality of conditions with respect to the adjustment item that does not contribute to prediction of the quality index, in response to determining by the confirmation part that there is the adjustment item that does not contribute to prediction of the quality index, and the machine learning part may be configured to implement machine learning of the quality prediction model further using the acquired additional second learning data. According to the configuration, when a decrease in the estimating accuracy of the quality prediction model is predicted as described above, by obtaining the additional second learning data and using the obtained additional second learning data for machine learning, it can be expected to improve the estimating accuracy of the generated quality prediction model (suppress a decrease in the estimating accuracy).

In the quality prediction system according to the above aspect, statistically analyzing the each sample may include: standardizing a value of each adjustment item of each sample included in the first learning data and the second learning data; calculating variance of the each adjustment item from the standardized value of the each sample; and recognizing an adjustment item with a calculated value of variance being 0 as the adjustment item that does not contribute to prediction of the quality index. According to the configuration, the adjustment item that does not contribute to the prediction of the quality index can be appropriately specified, thereby appropriately collecting the additional second learning data useful for improving the accuracy of the quality prediction model.

In the quality prediction system according to the above aspect, statistically analyzing the each sample may include: principal-component analyzing each sample included in the first learning data and the second learning data; and recognizing an adjustment item corresponding to a principal component whose contribution rate is lower than a threshold value among principal components obtained by principal component analysis as the adjustment item that does not contribute to prediction of the quality index. According to the configuration, the adjustment item that does not contribute to the prediction of the quality index can be appropriately specified, thereby appropriately collecting the additional second learning data useful for improving the accuracy of the quality prediction model.

In the quality prediction system according to the above aspect, the data transfer part may be configured to convert the acquired first learning data to match the second learning data by a Frustratingly Easy Domain Adaptation method or a Correlation Alignment method. According to the configuration, the transfer of the first learning data can be realized by a simple method, thereby reducing the costs for constructing the quality prediction system.

In the quality prediction system according to the above aspect, the second data acquisition part may be further configured to acquire additional second learning data which is further collected in the second manufacturing equipment in response to the quality index of the second product manufactured by the second manufacturing equipment, in which the adjustment amount of the each adjustment item is set to the adjustment amount specified by the specifying part, not satisfying the quality standard. The machine learning part may be further configured to implement machine learning of the quality prediction model again further using the acquired additional second learning data, and the specifying part may be further configured to specify the adjustment amount of the each adjustment item of the second manufacturing equipment so that the predicted quality index of the second product satisfies the quality standard, using the retrained quality prediction model.

Although the accuracy of the quality prediction model satisfies the standard to some extent, it may be insufficient to appropriately specify the true adjustment amount of each adjustment item for satisfying the quality standard. In such a case, even if the adjustment amount of each adjustment item of the second manufacturing equipment is set to the optimum adjustment amount specified using the trained quality prediction model, a second product that satisfies the quality standard may not be produced. In such a case, according to the configuration, by acquiring the additional second learning data and improving the accuracy of the quality prediction model, it is possible to increase the possibility of specifying the true optimum adjustment amount of each adjustment item for satisfying the quality standard.

The quality prediction system according to the above aspect may further include a candidate presenting part configured to specify a condition for each adjustment item in the second manufacturing equipment, which obtains a sample that contributes to improving prediction accuracy of the quality prediction model for the first learning data and the second learning data, according to a predetermined evaluation standard, and present the specified condition. According to the configuration, when improving the accuracy of the quality prediction model, efficiency of the work of collecting the additional second learning data can be improved, thereby reducing the costs for generating the quality prediction model.

In the quality prediction system according to the above aspect, the first manufacturing equipment may be a basic production line that serves as a basis for other production lines, and the second manufacturing equipment may be a duplicate production line configured by duplicating the basic production line. According to the configuration, when a new production line is constructed by duplicating the basic production line, the costs for generating the quality prediction model can be reduced, and a decrease in the estimating accuracy of the generated quality prediction model can be suppressed. Further, by using the generated quality prediction model, it is possible to appropriately determine the adjustment amount of the adjustment item of the duplicate production line.

In the quality prediction system according to the above aspect, the first manufacturing equipment may be a production line before making a state change, and the second manufacturing equipment may be a production line after making the state change. According to the configuration, in a scene where any intentional change is made to the existing production line and a scene where a state change occurs due to unintended factors, it is possible to reduce the costs for generating the quality prediction model and suppress a decrease in the estimating accuracy of the generated quality prediction model. Moreover, by using the generated quality prediction model, it is possible to appropriately determine the adjustment amount of the adjustment item of the production line after the state change.

In the quality prediction system according to the above aspect, the quality prediction model may be configured by a neural network, a support vector machine, or a regression model. According to the configuration, it is possible to prepare the quality prediction model easily, thereby reducing the costs for constructing the quality prediction system.

In the quality prediction model according to each embodiment above, the first learning data is transferred to match the second learning data so as to be used for machine learning together with the second learning data. However, the method of transfer learning may not be limited to such a configuration. When the quality prediction model is configured to be able to consider the difference between the domains of the first learning data and the second learning data (environments where each data is acquired), the above conversion of the first learning data may be omitted.

For example, a quality prediction system according to one aspect of the present invention includes: a first data acquisition part configured to acquire first learning data which is collected in first manufacturing equipment and indicates a relationship between each adjustment item of the first manufacturing equipment and a quality index of a first product manufactured by the first manufacturing equipment; a second data acquisition part configured to acquire second learning data which is collected in second manufacturing equipment and indicates a relationship between each adjustment item of the second manufacturing equipment and a quality index of a second product manufactured by the second manufacturing equipment; a machine learning part configured to implement machine learning of a quality prediction model for predicting the quality index of the second product from the each adjustment item of the second manufacturing equipment, using the acquired first learning data and the acquired second learning data; a specifying part configured to specify an adjustment amount of the each adjustment item of the second manufacturing equipment so that the predicted quality index of the second product satisfies a quality standard, using the trained quality prediction model; and an output part configured to output the specified adjustment amount of the each adjustment item of the second manufacturing equipment. The quality prediction model includes a kernel function, and the machine learning includes constructing a kernel function for the first learning data by weighting a kernel function for the second learning data, and adjusting a value of each parameter of the quality prediction model based on statistical criteria. The kernel function is used to perform nonlinear mapping. In machine learning, the weighting of the kernel function may be appropriately set so that the difference between the domains of the first learning data and the second learning data is taken into consideration.

Embodiments of the present invention may not be limited to the quality prediction system described above. A device according to one aspect of the present invention may be configured by extracting, for example, a part such as the part that implements machine learning of the quality prediction model, the part that specifies the adjustment amount of each adjustment item in the second manufacturing equipment using the trained quality prediction model, etc. from the quality prediction system according to each embodiment above. A device corresponding to the part that implements machine learning of the quality prediction model may be called, for example, a learning device, a model-generating device, or the like. A device corresponding to the part that uses the trained quality prediction model may be called, for example, an estimation device, a prediction device, a quality prediction device, an adjustment amount specifying device, or the like.

As an example, ae model-generating device according to one aspect of the present invention includes: a first data acquisition part configured to acquire first learning data which is collected in first manufacturing equipment and indicates a relationship between each adjustment item of the first manufacturing equipment and a quality index of a first product manufactured by the first manufacturing equipment; a second data acquisition part configured to acquire second learning data which is collected in second manufacturing equipment and indicates a relationship between each adjustment item of the second manufacturing equipment and a quality index of a second product manufactured by the second manufacturing equipment; a data transfer part configured to convert the acquired first learning data to match the second learning data to implement transfer learning; and a machine learning part configured to implement machine learning of a quality prediction model for predicting the quality index of the second product from the each adjustment item of the second manufacturing equipment, using the converted first learning data and the second learning data. Further, as an example, a quality prediction device according to one aspect of the present invention includes: a specifying part configured to specify the adjustment amount of each adjustment item of the second manufacturing equipment so that the predicted quality index of the second product satisfies the quality standard, using the trained quality prediction model; and an output part configured to output the specified adjustment amount of the each adjustment item of the second manufacturing equipment.

As another aspect of the quality prediction system and the device according to each embodiment above, one aspect of the present invention may be an information processing method that realizes all or part of each of the above configurations, may be a program, or may be a storage medium that stores such a program and is readable by a computer, other devices, or machines. Here, the storage medium readable by a computer is a medium that stores information such as a program by electrical, magnetic, optical, mechanical, or chemical action. The information processing method that realizes all or part of each of the above configurations may be called, for example, a quality prediction method, a model generation method, a learning method, an adjustment amount specifying method, or the like depending on the contents of calculation involved. Similarly, the program that realizes all or part of each of the above configurations may be called, for example, a quality prediction program, a model generation program, a learning program, an adjustment amount specifying program, or the like.

For example, a quality prediction method according to one aspect of the present invention is an information processing method for a computer to execute: acquiring first learning data which is collected in first manufacturing equipment and indicates a relationship between each adjustment item of the first manufacturing equipment and a quality index of a first product manufactured by the first manufacturing equipment; acquiring second learning data which is collected in second manufacturing equipment and indicates a relationship between each adjustment item of the second manufacturing equipment and a quality index of a second product manufactured by the second manufacturing equipment; converting the acquired first learning data to match the second learning data to implement transfer learning; implementing machine learning of a quality prediction model for predicting the quality index of the second product from the each adjustment item of the second manufacturing equipment, using the converted first learning data and the second learning data; specifying an adjustment amount of the each adjustment item of the second manufacturing equipment so that the predicted quality index of the second product satisfies a quality standard, using the trained quality prediction model; and outputting the specified adjustment amount of the each adjustment item of the second manufacturing equipment.

Further, for example, a quality prediction program according to one aspect of the present invention is a program for a computer to execute: acquiring first learning data which is collected in first manufacturing equipment and indicates a relationship between each adjustment item of the first manufacturing equipment and a quality index of a first product manufactured by the first manufacturing equipment; acquiring second learning data which is collected in second manufacturing equipment and indicates a relationship between each adjustment item of the second manufacturing equipment and a quality index of a second product manufactured by the second manufacturing equipment; converting the acquired first learning data to match the second learning data to implement transfer learning; implementing machine learning of a quality prediction model for predicting the quality index of the second product from the each adjustment item of the second manufacturing equipment, using the converted first learning data and the second learning data; specifying an adjustment amount of the each adjustment item of the second manufacturing equipment so that the predicted quality index of the second product satisfies a quality standard, using the trained quality prediction model; and outputting the specified adjustment amount of the each adjustment item of the second manufacturing equipment.

Effects of Invention

According to the present invention, it is possible to reduce the costs relating to generation of a model and suppress a decrease in the estimating accuracy of the generated model.

BRIEF DESCRIPTION OF DRAWINGS

FIG. 1 schematically shows an example of a scene to which the present invention is applied.
FIG. 2 schematically shows an example of the hardware configuration of the quality prediction system according to an embodiment.
FIG. 3 schematically shows an example of the software configuration of the quality prediction system according to an embodiment.
FIG. 4 schematically shows an example of the configuration of the learning data according to an embodiment.
FIG. 5A is a flowchart showing an example of the processing procedure of the quality prediction system according to an embodiment.
FIG. 5B is a flowchart showing an example of the processing procedure of the quality prediction system according to an embodiment.
FIG. 6A is a flowchart showing an example of the procedure of analysis processing (subroutine) according to an embodiment.
FIG. 6B is a flowchart showing an example of the procedure of analysis processing (subroutine) according to an embodiment.
FIG. 7 shows an example of the conversion method of learning data according to an embodiment.
FIG. 8 is a flowchart showing an example of the procedure of condition specifying processing (subroutine) according to an embodiment.
FIG. 9 schematically shows an example of the method for obtaining a plurality of condition candidates in the condition specifying processing according to an embodiment.

embodiment.
FIG. 10 schematically shows an example of the configuration of the quality prediction system according to another embodiment.

DESCRIPTION OF EMBODIMENTS

Hereinafter, an embodiment (hereinafter also referred to as "this embodiment") according to one aspect of the present invention will be described based on the drawings. However, this embodiment described below is merely an example of the present invention in every aspect. It goes without saying that various modifications and variations can be made without departing from the scope of the present invention. In other words, in implementing the present invention, a specific configuration according to the embodiment may be appropriately employed. Although the data mentioned in this embodiment is described in natural language, more specifically, the data is specified in computer-recognizable pseudo-language, commands, parameters, machine language, and the like.

1. Application example

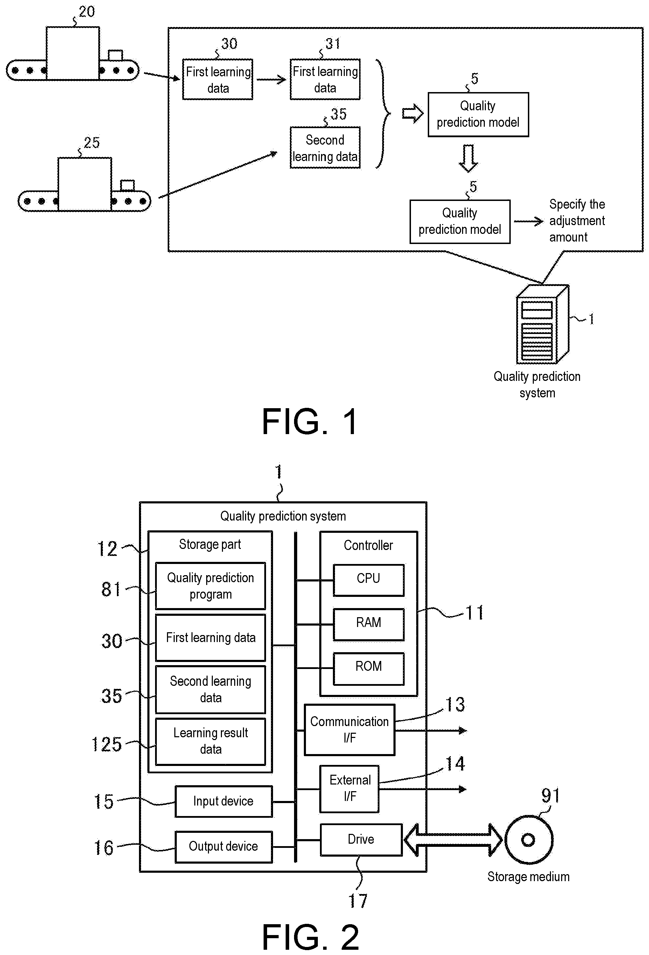

FIG. 1 schematically shows an example of a scene to which the present invention is applied. A quality prediction system 1 according to this embodiment is a computer that is configured to generate a quality prediction model for predicting the quality of a product manufactured in manufacturing equipment by machine learning, and use the generated trained quality prediction model to determine an adjustment amount for the manufacturing equipment so as to manufacture a product that satisfies a quality standard.

First, the quality prediction system 1 acquires first learning data 30 collected in first manufacturing equipment 20. The first learning data 30 is configured to indicate the relationship between each adjustment item of the first manufacturing equipment 20 and the quality index of a first product manufactured by the first manufacturing equipment 20. Further, the quality prediction system 1 acquires second learning data 35 collected in second manufacturing equipment 25. The second learning data 35 is configured to indicate the relationship between each adjustment item of the second manufacturing equipment 25 and the quality index of a second product manufactured by the second manufacturing equipment 25. The quality prediction system 1 converts the acquired first learning data 30 to match the second learning data 35 in order to perform transfer learning. By this conversion, the quality prediction system 1 acquires the converted first learning data 31. The quality prediction system 1 uses the converted first learning data 31 and the second learning data 35 to perform machine learning of a quality prediction model 5 for predicting the quality index of the second product from each adjustment item of the second manufacturing equipment 25. The quality prediction system 1 uses the trained quality prediction model 5 to specify the adjustment amount of each adjustment item of the second manufacturing equipment 25 so that the predicted quality index of the second product satisfies the quality standard. Then, the quality prediction system 1 outputs the specified adjustment amount of each adjustment item of the second manufacturing equipment 25.

As described above, in this embodiment, the first learning data 30 (transfer source) obtained in the first manufacturing equipment 20 is converted to match the second learning data 35 (transfer destination) obtained in the second manufacturing equipment 25, making it possible to increase the number of samples of the learning data used to generate the quality prediction model 5. Thus, even if the man-hours for experiments performed in the second manufacturing equipment 25 to obtain the second learning data 35 are reduced and suppress the number of samples obtained as the second learning data 35, the learning data of a sufficient number of samples for generating the quality prediction model 5 can be secured by transferring the first learning data 30. Thus, it can be expected to improve the estimating accuracy of the generated trained quality prediction model 5 (that is, to suppress a decrease in estimating accuracy). Hence, according to this embodiment, it is possible to reduce the costs relating to generation of the quality prediction model 5 and to suppress the estimating accuracy of the generated quality prediction model 5 from decreasing. Further, by using the generated quality prediction model 5, it is possible to appropriately determine the adjustment amount of the adjustment item of the second manufacturing equipment 25.

Each manufacturing equipment (20, 25) may not be particularly limited to certain types as long as it is equipment related to manufacturing of products such as a production line, and may be appropriately selected according to the embodiment. Each manufacturing equipment (20, 25) may be an entire production line (which may include an inspection process), or may be a part of a production line (for example, one or more devices that constitute a production line). The first manufacturing equipment 20 is the equipment of the original domain that is the transfer source of transfer learning. The second manufacturing equipment 25 is the equipment of the target domain that is the transfer destination of the first learning data 30, and is the equipment which generates the quality prediction model 5 by transfer learning and for which the adjustment item is adjusted by using the generated quality prediction model 5. If there are any similarities between the first manufacturing equipment 20 and the second manufacturing equipment 25, for example, most of the specifications of the products to be produced match, or they include manufacturing processes based on similar physical phenomena or mechanisms, the types of the first manufacturing equipment 20 and the second manufacturing equipment 25 may not necessarily match each other.

In one example, the first manufacturing equipment 20 may be a basic production line (mother line) that is the basis of other production lines, and the second manufacturing equipment 25 may be a duplicate production line (copy line) configured by duplicating the basic production line. In this case, in a scene where a new production line is constructed by duplicating the mother line, the costs relating to generation of the quality prediction model 5 can be reduced and a decrease in the estimating accuracy of the generated quality prediction model 5 can be suppressed. Further, by using the generated quality prediction model 5, it is possible to appropriately determine the adjustment amount of the adjustment item of the copy line.

In another example, the first manufacturing equipment 20 may be a production line before making a state change, and the second manufacturing equipment 25 may be the same production line after making the state change. In this case, in a scene where any change is made to the existing production line and a scene where a state change occurs due to unintended factors, it is possible to reduce the costs relating to generation of the quality prediction model 5, and suppress a decrease in the estimating accuracy of the generated quality prediction model 5. Moreover, by using the generated quality prediction model 5, it is possible to appropriately determine the adjustment amount of the adjustment item of the production line after the state change. An intentional change to the existing production line may be, for example, an event that can cause a change of the adjustment amount such as changes of the products to be manufactured, replacement of the machines used, revision of manufacturing specifications, changes of the manufacturing conditions, etc. In addition, the unintended factors that cause a state change in the existing production line may be, for example, environmental changes (for example, seasonal fluctuations, etc.) and aged deterioration of constituent devices.

The types of the adjustment items for each manufacturing equipment (20, 25) may not be particularly limited and may be appropriately selected according to the embodiment as long as the adjustment items are items to be adjusted during manufacturing of products, such as processing speed, processing temperature, room temperature, position of device, angle of robot arm, torque, pressure, flow rate, input angle/position/amount of material, current/voltage, frequency, and various control parameters (PID control, etc.). The adjustment items of the first manufacturing equipment 20 and the adjustment items of the second manufacturing equipment 25 may not be completely the same if the adjustment items overlap at least partially. In the following, for convenience of description, it is assumed that processing is being executed in regard to common adjustment items. The first product and the second product may be appropriately selected according to each manufacturing equipment (20, 25), respectively. The types of the first product and the second product do not necessarily match. Each product may be, for example, foods (for example, sweets, bread, etc.), cosmetics, pharmaceuticals, electronic parts, chemical materials/chemical products (for example, batteries, etc.), semiconductors, automobile parts, etc. The type of the quality index may not be particularly limited and may be appropriately selected according to the embodiment as long as the quality index is an index that can be used for evaluating the quality of the product, such as tensile strength (heat seal strength), mass (weight checker), pressure (air leak test), optical characteristics (for example, light intensity, transmittance, etc.), position, dimensions, electrical characteristics (for example, resistance value, electrostatic capacitance, etc.), processing time, etc.

2. Configuration example

[Hardware configuration]

FIG. 2 schematically shows an example of the hardware configuration of the quality prediction system 1 according to this embodiment. As shown in FIG. 2, the quality prediction system 1 according to this embodiment is a computer to which a controller 11, a storage part 12, a communication interface 13, an external interface 14, an input device 15, an output device 16, and a drive 17 are electrically connected. In FIG. 2, the communication interface and the external interface are indicated as "communication I/F" and "external I/F", respectively.

The controller 11 includes a CPU (Central Processing Unit), which is an example of a hardware processor, a RAM (Random Access Memory), a ROM (Read Only Memory), etc., and is configured to execute information processing based on programs and various data. The storage part 12 is an example of a memory, and is configured by, for example, a hard disk drive, a solid state drive, or the like. In this embodiment, the storage part 12 stores various information such as the quality prediction program 81, the first learning data 30, the second learning data 35, the learning result data 125, etc.

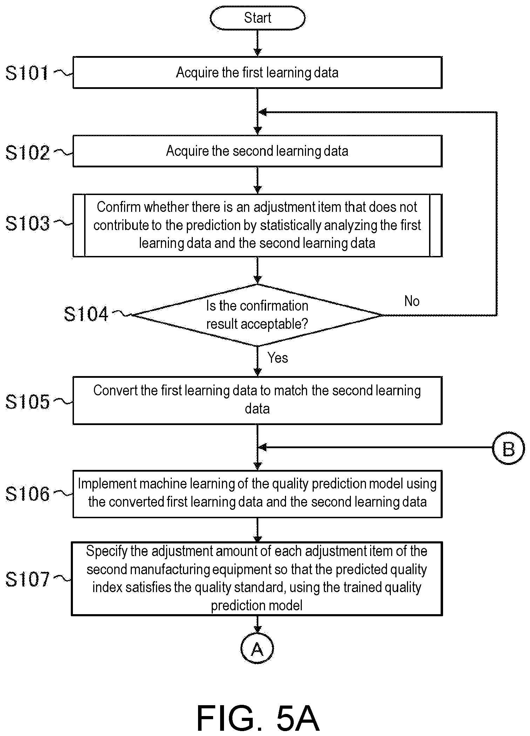

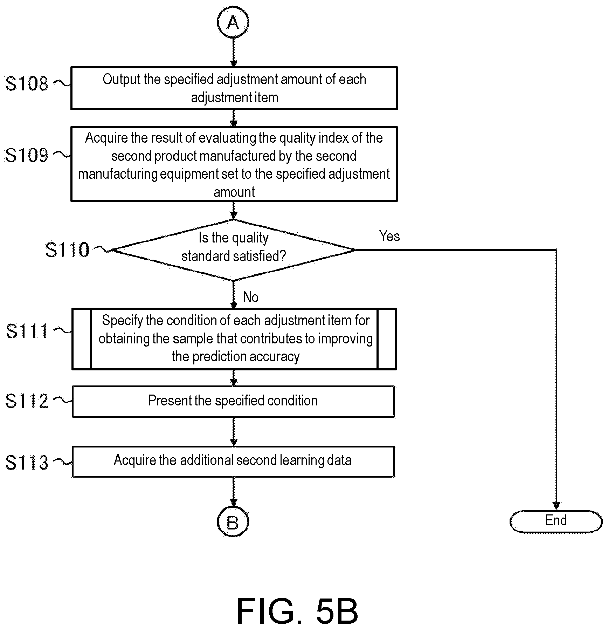

The quality prediction program 81 is a program for causing the quality prediction system 1 to execute information processing (FIG. 5A and FIG. 5B), described later, regarding the determination of the adjustment amount of the second manufacturing equipment 25 using the machine learning of the quality prediction model 5 and the trained quality prediction model 5. The quality prediction program 81 contains a series of instructions for the information processing. The learning result data 125 indicates information about the trained quality prediction model 5. In this embodiment, the learning result data 125 is generated as a result of executing the quality prediction program 81. Details will be described later.

The communication interface 13 is, for example, a wired LAN (Local Area Network) module, a wireless LAN module, or the like, and is an interface for performing wired or wireless communication via a network. The external interface 14 is, for example, a USB (Universal Serial Bus) port, a dedicated port, or the like, and is an interface for connecting with an external device. The quality prediction system 1 may be connected to each manufacturing equipment (20, 25) via either the communication interface 13 or the external interface 14.

The input device 15 is, for example, a device for performing input such as a mouse and a keyboard. The output device 16 is, for example, a device for performing output such as a display and a speaker. An operator such as a user can operate the quality prediction system 1 using the input device 15 and the output device 16.

The drive 17 is, for example, a CD drive, a DVD drive, or the like, and is a drive device for reading various information such as programs stored in a storage medium 91. The storage medium 91 is a medium that stores information such as programs by electrical, magnetic, optical, mechanical, or chemical action so that computers, other devices, machines, etc. can read various information such as the programs stored. At least one of the quality prediction program 81, the first learning data 30, and the second learning data 35 may be stored in the storage medium 91. The quality prediction system 1 may acquire at least one of the quality prediction program 81, the first learning data 30, and the second learning data 35 from this storage medium 91. In FIG. 2, a disk-type storage medium such as a CD or DVD is illustrated as an example of the storage medium 91. However, the type of the storage medium 91 is not limited to the disk type, and may be other than the disk type. A storage medium other than the disk type may be, for example, a semiconductor memory such as a flash memory. The type of the drive 17 may be arbitrarily selected according to the type of the storage medium 91.

Regarding the specific hardware configuration of the quality prediction system 1, it is possible to omit, replace, and add components as appropriate according to the embodiment. For example, the controller 11 may include multiple hardware processors. The hardware processor may be configured by a microprocessor, a field-programmable gate array (FPGA), a digital signal processor (DSP), etc. The storage part 12 may be configured by the RAM and ROM included in the controller 11. At least one of the communication interface 13, the external interface 14, the input device 15, the output device 16, and the drive 17 may be omitted. The quality prediction system 1 may be configured by multiple computers. In this case, the hardware configuration of each computer may or may not be consistent with each other. In addition, the quality prediction system 1 may be a general-purpose server device, a general-purpose PC (Personal Computer), an industrial PC (IPC), a PLC (Programmable Logic Controller), or the like, in addition to an information processing device designed exclusively for the service provided.

[Software configuration]

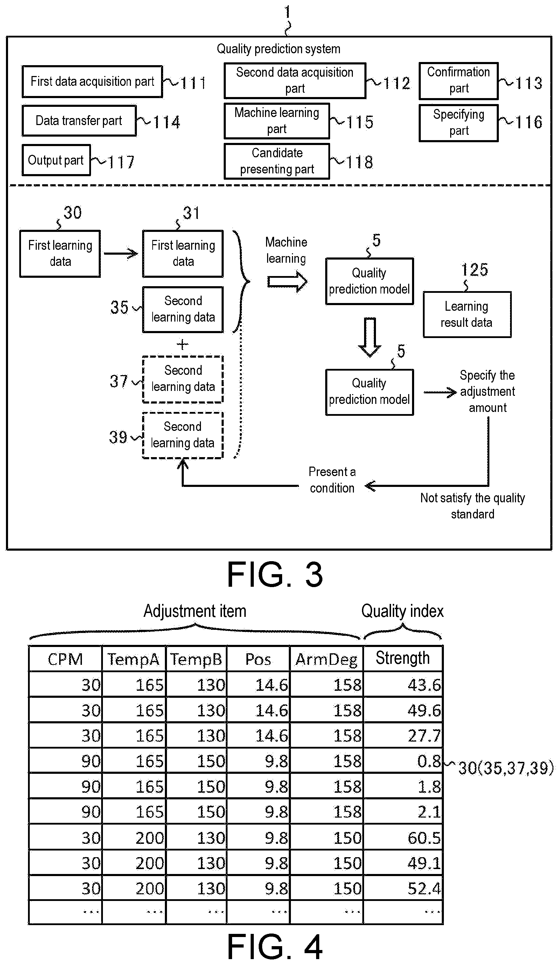

FIG. 3 schematically shows an example of the software configuration of the quality prediction system 1 according to this embodiment. The controller 11 of the quality prediction system 1 expands the quality prediction program 81 stored in the storage part 12 to the RAM. Then, the controller 11 causes the CPU to interpret and execute the instructions included in the quality prediction program 81 expanded in the RAM, and controls each component. Thus, the quality prediction system 1 according to this embodiment operates as a computer that includes a first data acquisition part 111, a second data acquisition part 112, a confirmation part 113, a data transfer part 114, a machine learning part 115, a specifying part 116, a output part 117, and a candidate presenting part 118 as software modules. That is, in this embodiment, each software module of the quality prediction system 1 is implemented by the controller 11 (CPU).

The first data acquisition part 111 is configured to acquire the first learning data 30 which is collected in the first manufacturing equipment 20 and indicates the relationship between each adjustment item of the first manufacturing equipment 20 and the quality index of the first product manufactured by the first manufacturing equipment 20. The second data acquisition part 112 is configured to acquire the second learning data 35 which is collected in the second manufacturing equipment 25 and indicates the relationship between each adjustment item of the second manufacturing equipment 25 and the quality index of the second product manufactured by the second manufacturing equipment 25.

The data transfer part 114 is configured to convert the acquired first learning data 30 to match the second learning data 35 in order to implement transfer learning. The machine learning part 115 is configured to implement machine learning of the quality prediction model 5 for predicting the quality index of the second product from each adjustment item of the second manufacturing equipment 25 using the converted first learning data 31 and the second learning data 35. In addition, the machine learning part 115 is configured to generate the result of machine learning, that is, information about the generated trained quality prediction model 5 as the learning result data 125, and store the generated learning result data 125 in a predetermined storage area. The learning result data 125 may be configured as appropriate to include information for reproducing the trained quality prediction model 5.

Here, even with the first learning data 30 transferred, the learning data may be insufficient for obtaining the quality prediction model 5 with favorable estimating accuracy. For example, when the number of samples in which the adjustment amount is changed for a specific adjustment item (that is, the conditions are different) is small for both the first learning data 30 and the second learning data 35, there is a possibility that the estimating accuracy of the quality prediction model 5 with respect to the specific adjustment item may deteriorate. In order to deal with this, the quality prediction system 1 according to this embodiment includes the confirmation part 113.

The confirmation part 113 is configured to confirm whether there is an adjustment item that does not contribute to the prediction of the quality index among the adjustment items by statistically analyzing each sample included in the acquired first learning data 30 and second learning data 35. In response to this, when the confirmation part 113 determines that there is an adjustment item that does not contribute to the prediction of the quality index, the second data acquisition part 112 may be further configured to acquire additional second learning data 37 collected by experimenting the manufacturing of the second product by the second manufacturing equipment 25 under a plurality of conditions for the adjustment item that does not contribute to the prediction of the quality index. The machine learning part 115 may be configured to implement machine learning of the quality prediction model 5 further using the acquired additional second learning data 37 in addition to the converted first learning data 31 and the second learning data 35.

The specifying part 116 is configured to specify the adjustment amount of each adjustment item of the second manufacturing equipment 25 so that the predicted quality index of the second product satisfies the quality standard, using the trained quality prediction model 5. The output part 117 is configured to output the specified adjustment amount of each adjustment item of the second manufacturing equipment 25. As an example of output processing, when the quality prediction system 1 is connected to the second manufacturing equipment 25, the output adjustment amount may be directly reflected in the second manufacturing equipment 25. In another example, the specified adjustment amount may be output to a display or the like, and the output adjustment amount may be indirectly reflected in the second manufacturing equipment 25 by an operation of the operator who views the specified adjustment amount.

Even with the first learning data 30 transferred, the accuracy of the generated trained quality prediction model 5 may be insufficient to adequately specify the true adjustment amount of each adjustment item to satisfy the quality standard in the second manufacturing equipment 25. In such a case, even if the adjustment amount of each adjustment item of the second manufacturing equipment 25 is set to the optimum adjustment amount specified using the trained quality prediction model 5, a second product that satisfies the quality standard may not be manufactured.

Therefore, the second data acquisition part 112 may be further configured to acquire additional second learning data 39 that is further collected in the second manufacturing equipment 25 when the quality index of the second product actually manufactured by the second manufacturing equipment 25, for which the adjustment amount of each adjustment item is set to the adjustment amount specified by the specifying part 116, does not satisfy the quality standard. The machine learning part 115 may be further configured to implement machine learning of the quality prediction model 5 again further using the acquired additional second learning data 39 in addition to the converted first learning data 31 and the second learning data 35 (and additional second learning data 37). The specifying part 116 may be further configured to specify the adjustment amount of each adjustment item of the second manufacturing equipment 25 so that the predicted quality index of the second product satisfies the quality standard, using the retrained quality prediction model 5.

The candidate presenting part 118 is configured to specify a condition of each adjustment item in the second manufacturing equipment 25 for obtaining samples that contribute to improving the prediction accuracy of the quality prediction model 5 for the first learning data 31 (30) and the second learning data 35 according to a predetermined evaluation standard, and present the specified condition. The additional second learning data 39 may be collected according to the presented condition.

FIG. 4 schematically shows an example of the configuration of each learning data (30, 35, 37, 39) according to this embodiment. Each learning data (30, 35, 37, 39) illustrated in FIG. 4 has a data structure in a table format. One record (row data) corresponds to one sample obtained by designating the adjustment amount of each adjustment item to manufacture a product, and conducting an experiment to evaluate the quality index of the manufactured product. Each record has fields for storing the adjustment amount of each adjustment item and the value of the quality index of the product manufactured with the adjustment amount. Thus, each learning data (30, 35, 37, 39) according to this embodiment is configured to indicate the relationship between the adjustment amount of each adjustment item and the value of the quality index of the product manufactured with the adjustment amount. However, the data structure of each learning data (30, 35, 37, 39) may not be limited to such an example and may be appropriately determined according to the embodiment if the learning data can be used for machine learning of the estimation model (quality prediction model 5) that estimates the value of the quality index from the adjustment amount of each adjustment item.

Each software module of the quality prediction system 1 will be described in detail in an operation example described later. This embodiment illustrates an example in which each software module of the quality prediction system 1 is realized by a general-purpose CPU. However, some or all of the software modules may be implemented by one or more dedicated processors. That is, each module described above may be implemented as a hardware module. Further, regarding the software configuration of the quality prediction system 1, software modules may be omitted, replaced, or added as appropriate according to the embodiment.

3. Operation example

FIG. 5A and FIG. 5B are flowcharts showing an example of the processing procedure of the quality prediction system 1 according to this embodiment. The following processing procedure of the quality prediction system 1 is an example of the quality prediction method. However, the following processing procedure of the quality prediction system 1 is merely an example, and each step may be changed as much as possible. Further, regarding the following processing procedure of the quality prediction system 1, it is possible to omit, replace, or add steps as appropriate according to the embodiment.

<Step S101>

In step S101, the controller 11 operates as the first data acquisition part 111 and acquires the first learning data 30.

The first learning data 30 may be appropriately collected in the first manufacturing equipment 20 so as to indicate the relationship between each adjustment item of the first manufacturing equipment 20 and the quality index of the first product manufactured by the first manufacturing equipment 20. The condition for each adjustment item for obtaining the first learning data 30 may be determined as appropriate. As an example, the first learning data 30 may be collected according to an experimental plan created based on a known experimental plan method such as full factorial designs (one-way, multi-way), partial implementation designs (orthogonal table, Plackett and Burman design, mixed-level design, supersaturated design, one-leaf design), randomized block design, response surface designs (central composite design, Box-Behnken design), parameter design, optimal design (D-optimal, G-optimal), screening design, and Latin hypercube design. The first learning data 30 may be collected automatically by a computer, or may be collected manually, at least partially by an operation of the operator.

The first learning data 30 may be collected for any reason. In one example, the estimation model for predicting the quality index of the first product from each adjustment item of the first manufacturing equipment 20 may be generated, similar to the quality prediction model 5 according to this embodiment. The first learning data 30 may be collected for use in generation (machine learning) of this estimation model. In this case, the generated estimation model may be used to determine the adjustment amount of each adjustment item of the first manufacturing equipment 20. In another example, the first learning data 30 may be obtained simply for the purpose of confirming the operation of the first manufacturing equipment 20 without being used for generating the estimation model.

A route for acquiring the first learning data 30 may be appropriately selected according to the embodiment. In one example, when the quality prediction system 1 and the first manufacturing equipment 20 are connected, the controller 11 may acquire the first learning data 30 directly from the first manufacturing equipment 20. The quality prediction system 1 may be directly connected to the first manufacturing equipment 20. Alternatively, if the first manufacturing equipment 20 includes a PLC configured to control the first manufacturing equipment 20, the quality prediction system 1 may be connected to this PLC. In another example, the controller 11 may acquire the first learning data 30 via another computer, the storage part 12, a storage medium, or the like. When the first learning data 30 is acquired, the controller 11 advances the processing to the next step S102.

<Step S102>

In step S102, the controller 11 operates as the second data acquisition part 112 and acquires the second learning data 35.

The second learning data 35 may be appropriately collected in the second manufacturing equipment 25 so as to indicate the relationship between each adjustment item of the second manufacturing equipment 25 and the quality index of the second product manufactured by the second manufacturing equipment 25. The condition for each adjustment item for obtaining the second learning data 35 may be appropriately determined based on, for example, on-site knowledge. Similar to the first learning data 30, the condition for each adjustment item for obtaining the second learning data 35 may be determined based on an experimental plan method. At this time, the condition for the adjustment item employed when collecting the first learning data 30 may be omitted from the condition for obtaining the second learning data 35. The second learning data 35 may be collected automatically by a computer, or may be collected manually, at least partially by an operation of the operator.

Similar to the first learning data 30, a route for acquiring the second learning data 35 may be appropriately selected according to the embodiment. In one example, the controller 11 may acquire the second learning data 35 directly from the second manufacturing equipment 25. In another example, the controller 11 may acquire the second learning data 35 via another computer, the storage part 12, a storage medium, or the like. When the second learning data 35 is acquired, the controller 11 advances the processing to the next step S103. Nevertheless, the processing order of step S101 and step S102 may not be limited to the example of this embodiment, and may be arbitrarily changed.

<Step S103>

In step S103, the controller 11 statistically analyzes each sample included in the acquired first learning data 30 and second learning data 35 to confirm whether there is an adjustment item that does not contribute to the prediction of the quality index among the adjustment items. The statistical analysis method may be a method of evaluating an adjustment item for which samples with different conditions are insufficient among the adjustment items (that is, the spatial coverage of the learning data is insufficient), and the specific processing contents thereof may be appropriately determined according to the embodiment. In this embodiment, either of the following two processing procedures may be employed.

(1) First method

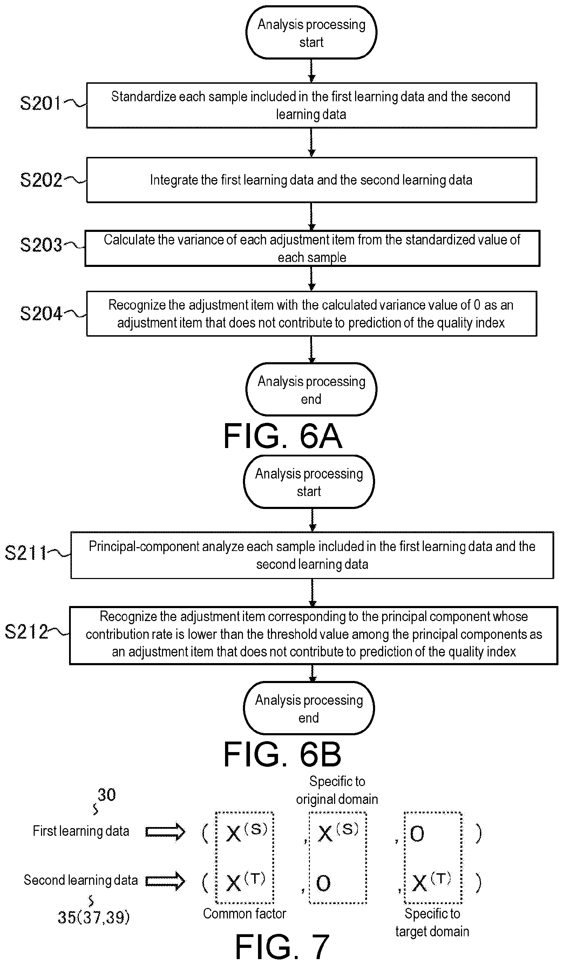

FIG. 6A is a flowchart showing an example of the procedure of statistical analysis processing (subroutine) by the first method according to this embodiment. The processing of step S103 according to this embodiment may include the processing of step S201 to step S204 below. However, the processing procedure shown in FIG. 6A is merely an example, and each processing may be changed as much as possible. Further, regarding the processing procedure shown in FIG. 6A, it is possible to omit, replace, or add steps as appropriate according to the embodiment.

In step S201, the controller 11 standardizes the value of each adjustment item of each sample included in each of the first learning data 30 and the second learning data 35. Standardization is a normalization process that converts the average value into a constant value (for example, converts the average value into data of 0). In step S202, the controller 11 integrates the first learning data 30 and the second learning data 35. That is, the controller 11 aligns the fields of each record and combines the first learning data 30 and the second learning data 35 into one data.

In step S203, the controller 11 calculates the variance of each adjustment item from the standardized value of each sample. A calculated variance value of 0 indicates that the condition assigned to the target adjustment item is the same, that is, samples with different conditions have not been obtained. Therefore, in step S204, the controller 11 recognizes an adjustment item with a calculated variance value of 0 as an adjustment item that does not contribute to the prediction of the quality index. When there is no adjustment item with a calculated variance value of 0, the controller 11 determines that there is no adjustment item that does not contribute to the prediction of the quality index. When the recognition is completed, the controller 11 terminates the analysis processing by the first method.

(2) Second method

FIG. 6B is a flowchart showing an example of the procedure of statistical analysis processing (subroutine) by the second method according to this embodiment. The processing of step S103 according to this embodiment may include the processing of step S211 to step S212 below. However, the processing procedure shown in FIG. 6B is merely an example, and each processing may be changed as much as possible. Further, regarding the processing procedure shown in FIG. 6B, it is possible to omit, replace, or add steps as appropriate according to the embodiment.

In step S211, the controller 11 performs principal component analysis on each sample included in the first learning data 30 and the second learning data 35. A low contribution rate of the principal component obtained by the principal component analysis (for example, the contribution rate is 0) indicates that dimensional compression can be performed by omitting the adjustment item corresponding to the principal component without losing most of the information of the learning data (that is, the spatial coverage with respect to the adjustment item is low). Therefore, in step S212, the controller 11 recognizes an adjustment item corresponding to a principal component whose contribution rate is lower than a threshold value, among the principal components obtained by the principal component analysis, as an adjustment item that does not contribute to the prediction of the quality index. In one example, the controller 11 may extract a principal component whose contribution rate is 0 as a principal component whose contribution rate is lower than a threshold value. In this case, the controller 11 may calculate a cumulative contribution rate by adding the principal components in descending order of the contribution rates, and recognize that there is an adjustment item that does not contribute to the prediction of the quality index when the number of principal components added until the calculated cumulative contribution rate reaches 100% is less than the number of adjustment items of each learning data (30, 35). At this time, the controller 11 may recognize the adjustment item corresponding to the principal component other than the principal components that constitute the cumulative contribution rate of 100% as an adjustment item that does not contribute to the prediction of the quality index. When the corresponding principal component does not exist, the controller 11 recognizes that there is no adjustment item that does not contribute to the prediction of the quality index. The adjustment item (and the direction of the adjustment amount thereof) corresponding to the principal component can be estimated from an eigenvector of the principal component. When the recognition is completed, the controller 11 terminates the analysis processing by the second method.

(Summary)

According to the first method and the second method described above, it is possible to appropriately specify the adjustment item that does not contribute to the prediction of the quality index. In this embodiment, at least one of the processing of the first method and the second method may be employed as the processing of step S103. The method to be employed may be selected by the operator. After confirming whether there is an adjustment item that does not contribute to the prediction of the quality index among the adjustment items, the controller 11 advances the processing to the next step S104.

<Step S104>

Returning to FIG. 5A and FIG. 5B, the controller 11 determines whether the confirmation result is acceptable.

In one example, the controller 11 may automatically determine whether the confirmation result is acceptable according to whether there is an adjustment item that does not contribute to the prediction of the quality index. That is, the controller 11 may determine that the confirmation result is unacceptable when there is an adjustment item that does not contribute to the prediction of the quality index, and determine that the confirmation result is acceptable when there is no adjustment item that does not contribute to the prediction of the quality index.

In another example, the controller 11 may present the confirmation result of step S103 to the operator via the output device 16, another computer (for example, user terminal), or the like, for example. Then, the controller 11 may determine whether the confirmation result is acceptable according to an operation of the operator via the input device 15, the input device of another computer, or the like.

In any case, only an adjustment item that does not affect the quality index may be extracted as an adjustment item that does not contribute to the prediction of the quality index. For example, in packaging machines, it is known that the length of the package (adjustment item) does not affect the strength of the center seal (quality index). In such a case, the controller 11 may determine that the confirmation result is acceptable.

When determining that the confirmation result is acceptable, the controller 11 advances the processing to the next step S105. On the contrary, when determining that the confirmation result is unacceptable, the controller 11 returns the processing to step S102 and executes the processing of step S102 to step S104 again. Again, in step S102, the controller 11 acquires additional second learning data 37 collected by experimenting the manufacturing of the second product performed by the second manufacturing equipment 25 under a plurality of conditions with respect to the adjustment item that does not contribute to the prediction of the quality index. Regarding the adjustment item that is recognized as not contributing to the prediction of the quality index, the conditions for the experiment for obtaining the additional second learning data 37 may be appropriately determined in the same manner as for each learning data (30, 35). In the processing of step S103, the adjustment item that does not contribute to the prediction of the quality index is appropriately specified, thereby appropriately collecting the additional second learning data 37 that is useful for improving the accuracy of the quality prediction model 5.

<Step S105>

In step S105, the controller 11 operates as the data transfer part 114 and converts the first learning data 30 to match the second learning data 35 in order to implement transfer learning. The controller 11 acquires the converted first learning data 31 as the calculation result. The conversion method of the first learning data 30 may not be particularly limited and may be appropriately selected according to the embodiment as long as transfer learning can be implemented. A known transfer learning method may be employed as the conversion method. In one example, the controller 11 may convert the first learning data 30 to match the second learning data 35 by the Frustratingly Easy Domain Adaptation method or the Correlation Alignment method.

FIG. 7 schematically shows an example of the method of converting the first learning data 30 and the second learning data 35 by the Frustratingly Easy Domain Adaptation method. The Frustratingly Easy Domain Adaptation method is the method disclosed in Reference 1 "H. Daume III (University of Utah), 'Frustratingly Easy Domain Adaptation , in Proceedings of the 45tt, Annual Meeting of the Association of Computational Linguistics, pp. 256-263 (2007))". When employing this method, the controller 11 converts each sample of each learning data (30, 35) into a vector with three times the length. When the additional second learning data (37, 39) is obtained, the controller 11 also converts the additional second learning data (37, 39) in the same manner as the second learning data 35.

$X^{(S)}$ in FIG. 7 indicates the sample value of the first learning data 30, and $X^{(T)}$ indicates the sample value of the second learning data (35, 37, 39). During this conversion, as shown in FIG. 7, the controller 11 substitutes the original sample values for two of the three parts and substitutes 0 for the remaining one part. Then, the controller 11 forms the part "$X^{(S)}$, $X^{(T)}$" where the original sample values overlap, and the parts "$X^{(S)}$, 0" and "0, $X^{(T)}$" where only one of the sample values overlaps. Thereby, the controller 11 can obtain the converted first learning data 31 ($X^{(S)}$, $X^{(S)}$, 0).

According to this method, it is possible to perform prediction with respect to factors common to the first manufacturing equipment 20 and the second manufacturing equipment 25 from the part "$X^{(S)}$, $X^{(T)}$" where both sample values overlap. It is possible to perform prediction with respect to factors specific to the first manufacturing equipment 20 (original domain) from the part "$X^{(S)}$, 0" where only the sample value of the first learning data 30 overlaps. It is possible to perform prediction with respect to factors specific to the second manufacturing equipment 25 (target domain) from the part "0, $X^{(T)}$" where only the sample value of the second learning data (35, 37, 39) overlaps.

The Correlation Alignment method is the method disclosed in Reference 2 "B. Sun, J. Feng, K. Saenko (University of Massachusetts Lowell), "Return of Frustratingly Easy Domain Adaptation", in Proceedings of 30th AAAI Conference on Artificial Intelligence, pp. 2058-2065 (2016)". When employing this method, the controller 11 calculates the covariance matrix of the first learning data 30 and the second learning data 35. When the additional second learning data (37, 39) is obtained, after integrating the additional second learning data (37, 39) into the second learning data 35, the controller 11 calculates the covariance matrix of the second learning data (35, 37, 39). Next, the controller 11 normalizes the first learning data 30 using the covariance matrix of the second learning data 35 (37, 39). Then, the controller 11 further converts the normalized first learning data 30 using the covariance matrix of the first learning data 30. Thereby, the controller 11 can obtain the converted first learning data 31.

According to these methods, it is possible to realize the transfer of the first learning data 30 by a simple method, thereby reducing the costs for constructing the quality prediction system 1. When the processing of step S105 is completed and the converted first learning data 31 is acquired, the controller 11 advances the processing to the next step S106.

<Step S106>

Returning to FIG. 5A and FIG. 5B, in step S106, the controller 11 operates as the machine learning part 115 and implements machine learning of the quality prediction model 5 for predicting the quality index of the second product from each adjustment item of the second manufacturing equipment 25 using the converted first learning data 31 and the second learning data 35. When the additional second learning data 37 is acquired, the controller 11 implements machine learning of the quality prediction model 5 further using the acquired additional second learning data 37.

[Equation 1]

$$y = f(x) + \varepsilon \ \dots \ (\text{Equation } 1)$$

The quality prediction model 5 includes one or more calculation parameters for deriving an inference result. In one example, the quality prediction model 5 is represented by the regression equation of Equation 1 above. The adjustment amount of each adjustment item is input to x in Equation 1, and the quality index (y) is derived. The parameter in the function f(x) and the constant term ($\varepsilon$) are examples of the calculation parameters. The number of quality indices to be predicted (inferred) is not necessarily one, and the quality prediction model 5 may be configured to predict the value of each of a plurality of quality indices. The machine learning is configured by training the quality prediction model 5 (that is, adjusting the values of the calculation parameters) so that the result of the quality prediction model 5 predicting the value of the quality index from the adjustment amount of each adjustment item is adapted to the true value (correct answer) of the corresponding quality index for each sample included in the converted first learning data 31 and the second learning data 35 (and further, the additional second learning data 37).

The type of the quality prediction model 5 may not be particularly limited and may be appropriately selected according to the embodiment as long as the quality prediction model 5 is a machine learning model that can be used for regression analysis. In addition, the machine learning method may be appropriately selected according to the type of machine learning model employed. As an example, the quality prediction model 5 may be configured by a neural network, a support vector machine, or a regression model.

When a neural network is employed, the weight of the connection between the neurons, the threshold value of each neuron, etc. are examples of the above calculation parameter. As a process of machine learning, the controller 11 adjusts the value of the calculation parameter by an error backpropagation method so that the error between the predicted value obtained when the adjustment amount of each adjustment item of each sample is input and the true value of the corresponding quality index is reduced.

When a support vector machine is employed, the parameter of the regression equation that constitutes the support vector machine is an example of the above calculation parameter. As a process of machine learning, the controller 11 adjusts the value of the calculation parameter by solving the optimization problem so that the error between the predicted value obtained when the adjustment amount of each adjustment item of each sample is input and the true value of the corresponding quality index is reduced.

When a regression model is employed, the parameter constituting the regression model (regression equation) is an example of the above calculation parameter. As a process of machine learning, the controller 11 adjusts the value of the calculation parameter by performing regression analysis such as multiple regression analysis so that the error between the predicted value obtained when the adjustment amount of each adjustment item of each sample is input and the true value of the corresponding quality index is reduced. In another example, the regression model may be configured to perform an operation of Gaussian process regression. In this case, as an example of the process of machine learning, the controller 11 may specify a parameter value so as to maximize the posterior probability based on maximum likelihood estimation. The quality prediction model 5 is configured by distribution of mean values in the posterior probability distribution.

According to these configurations, it is possible to prepare the quality prediction model 5 easily, thereby reducing the costs for constructing the quality prediction system 1. When the process of machine learning is completed, a trained quality prediction model 5 can be generated. The controller 11 generates learning result data 125 indicating the generated trained quality prediction model 5. The configuration of the learning result data 125 may not be particularly limited and may be appropriately determined according to the embodiment as long as the learning result data 125 can hold information for executing the calculation of the inference (prediction of the quality index). As an example, the learning result data 125 may be configured by information indicating the configuration of the quality prediction model 5 (for example, the structure of the neural network, etc.) and the value of the calculation parameter obtained by the above adjustment. The controller 11 saves the generated learning result data 125 in a predetermined storage area.

The predetermined storage area may be, for example, the RAM in the controller 11, the storage part 12, an external storage device, a storage medium, or a combination thereof. The storage medium may be, for example, a CD, a DVD, etc., and the controller 11 may store the learning result data 125 in the storage medium via the drive 17. The external storage device may be, for example, a data server such as NAS (Network Attached Storage). In this case, the controller 11 may use the communication interface 13 to store the learning result data 125 in a data server via a network. Also, the external storage device may be, for example, an external storage device connected to the quality prediction system 1 via the external interface 14. The process of saving the learning result data 125 may be omitted. When the saving of the learning result data 125 is completed, the controller 11 advances the processing to the next step S107.

<Step S107>

In step S107, the controller 11 operates as the specifying part 116 and specifies the adjustment amount of each adjustment item of the second manufacturing equipment 25 so that the predicted quality index of the second product satisfies the quality standard, using the trained quality prediction model 5.

The specific method for specifying the adjustment amount of each adjustment item may be appropriately determined according to the embodiment as long as the method is for estimating the optimum adjustment amount using the trained quality prediction model 5. As an example, the controller 11 may estimate the optimum adjustment amount of each adjustment item of the second manufacturing equipment 25 using the trained quality prediction model 5 by a known method such as the steepest descent method and the Newton method. Then, the controller 11 may specify the optimum adjustment amount estimated for each adjustment item as the adjustment amount of each adjustment item. The adjustment amount may be configured to directly indicate the value of the target adjustment item, or may be configured to indirectly indicate the value of the target adjustment item, such as a variation value from a reference value. When the specifying of the adjustment amount of each adjustment item is completed, the controller 11 advances the processing to the next step S108.

<Step S108>

In step S108, the controller 11 operates as the output part 117 and outputs the specified adjustment amount of each adjustment item of the second manufacturing equipment 25.

The output destination and output format may not be particularly limited and may be appropriately selected according to the embodiment. In one example, the controller 11 may directly output the specified adjustment amount of each adjustment item of the second manufacturing equipment 25 to the output device 16, the output device of another computer, or the like. Thereby, the quality prediction system 1 may prompt the operator to set each adjustment item to the specified adjustment amount and operate the second manufacturing equipment 25. In another example, when the quality prediction system 1 and the second manufacturing equipment 25 are connected, the controller 11 may output the specified adjustment amount of each adjustment item to the second manufacturing equipment 25 and set each adjustment item of the second manufacturing equipment 25 so as to operate with the specified adjustment amount. The quality prediction system 1 may be directly connected to the second manufacturing equipment 25. Alternatively, when the second manufacturing equipment 25 includes a PLC configured to control the second manufacturing equipment 25, the quality prediction system 1 may be connected to this PLC.

When the output of the specified adjustment amount of each adjustment item of the second manufacturing equipment 25 is completed, the controller 11 advances the processing to the next step S109.

<Step S109>

In step S109, the controller 11 acquires the result of evaluating the quality index of the second product actually manufactured by the second manufacturing equipment 25 with the adjustment amount of each adjustment item set to the specified adjustment amount.

Any measuring device suitable for the quality index may be used to evaluate the quality index of the second product. For example, a tensile tester, a weight checker, an air leak tester, an image inspection device, an optical property measuring device, a microgauge, a digital caliper, an electrical property measuring device, or the like may be used as the measuring device. In this case, the measured value obtained by the measuring device is an example of the evaluation result. When the quality prediction system 1 is connected to the second manufacturing equipment 25, the controller 11 may directly acquire the evaluation result of the quality index of the second product from the second manufacturing equipment 25. Alternatively, the controller 11 may acquire the evaluation result of the quality index of the second product through input of the operator. When the result of evaluating the quality index of the second product is acquired, the controller 11 advances the processing to the next step S110.

<Step S110>

In step S110, the controller 11 determines whether the quality index of the second product actually manufactured by the second manufacturing equipment 25 with the adjustment amount of each adjustment item set to the specified adjustment amount satisfies the quality standard based on the acquired evaluation result. The quality standard may be designated in advance by a threshold value or the like. In one example, the controller 11 may determine whether the quality index of the second product satisfies the quality standard by comparing the ) measured value obtained by the measuring device with the threshold value. When the quality index of the second product satisfies the quality standard, the controller 11 terminates the processing procedure according to this operation example. On the other hand, when the quality index of the second product does not satisfy the quality standard, the controller 11 advances the processing to the next step S111.

<Step S111>

In step S111, the controller 11 operates as the candidate presenting part 118 and specifies a condition (hereinafter also referred to as "optimum condition") for each adjustment item in the second manufacturing equipment 25, for obtaining the sample that contributes to improving the prediction accuracy of the quality prediction model 5 for the first learning data 31 (30) and the 1 second learning data 35 (37), according to a predetermined evaluation standard. The method for specifying the optimum condition according to the predetermined evaluation standard may be appropriately determined according to the embodiment.

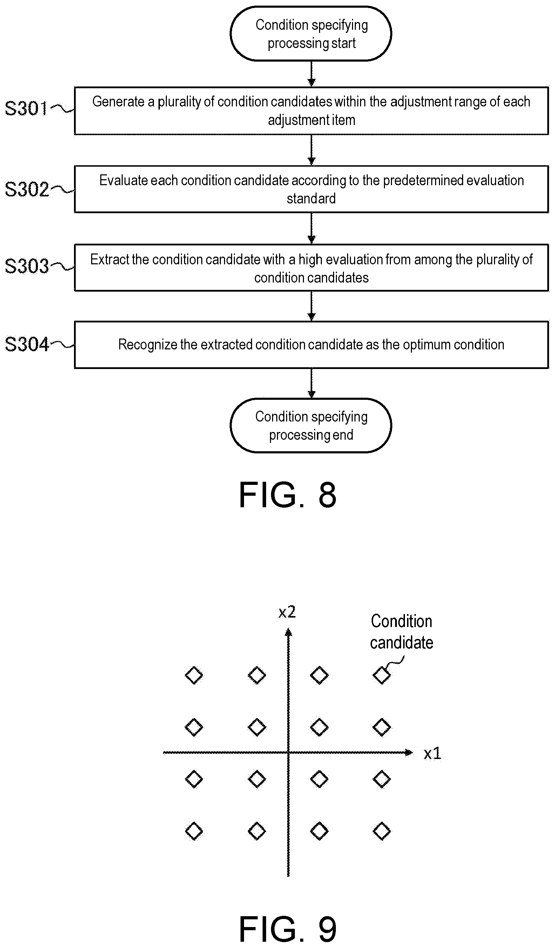

FIG. 8 is a flowchart showing an example of the procedure of condition specifying processing (subroutine) according to this embodiment. The processing of step S111 according to this embodiment may include the processing of step S301 to step S304 below. However, the processing procedure shown in FIG. 8 is merely an example, and each processing may be changed as much as possible. Further, regarding the processing procedure shown in FIG. 8, it is possible to omit, replace, or add steps as appropriate according to the embodiment.

In step S301, the controller 11 generates a plurality of condition candidates within an adjustment range of each adjustment item. The adjustment range of each adjustment item may be arbitrarily set by, for example, a numerical range designated in advance. In addition, the plurality of condition candidates may be arbitrarily designated within the adjustment range of each adjustment item, for example, according to a random or predetermined rule.

FIG. 9 schematically shows an example of the method for obtaining the plurality of condition candidates, x1 and x2 in FIG. 9 respectively correspond to adjustment items. Each point in FIG. 9 corresponds to a generated condition candidate. As illustrated in FIG. 9, the controller 11 may designate a plurality of condition candidates in a mesh by allocating adjustment amounts at regular intervals within the adjustment range of each adjustment item.

Returning to FIG. 8, in step S302, the controller 11 evaluates each condition candidate according to a predetermined evaluation standard. The predetermined evaluation standard may be appropriately set so as to evaluate conditions with a high probability of obtaining the sample that contributes to improving the prediction accuracy of the quality prediction model 5 for each learning data (30, 35, 37).

For example, the further the distance from each sample included in each learning data (30, 35, 37), the higher the possibility that the sample may give knowledge that does not appear in each learning data (30, 35, 37), so the sample is considered to contribute to the improvement of the prediction accuracy of the quality prediction model 5. Thus, in one example, the predetermined evaluation standard may be configured to include a first standard based on the distance from each sample included in each learning data (30, 35, 37). Furthermore, when the quality index predicted by the trained quality prediction model 5 is far from the quality standard (in particular, the quality index predicted against the quality standard is extremely poor), the sample corresponding to the predicted quality index is considered not contributing to the prediction for specifying the adjustment amount of each adjustment item to satisfy the quality standard. Thus, in one example, the predetermined evaluation standard may be configured to further include a second standard based on the difference between the quality index predicted by the trained quality prediction model 5 and the quality standard.

In this case, the controller 11 calculates the distance between each condition candidate and each sample included in each learning data (30, 35, 37), for example, by a method such as the k-nearest neighbor algorithm and LOF (Local Outlier Factor). Then, the controller 11 evaluates each condition candidate according to the calculated distance. That is, the controller 11 evaluates the target condition candidate higher as the calculated distance is larger, and evaluates the target condition candidate lower as the calculated distance is smaller. Further, the controller 11 uses the trained quality prediction model 5 to predict the quality index corresponding to each condition candidate (calculate the predicted value of the quality index). Subsequently, the controller 11 calculates the difference (in one example, the absolute value of the difference) between the predicted quality index (predicted value) and the quality standard. Then, the controller 11 evaluates the target condition candidate higher as the calculated difference is smaller, and evaluates the target condition candidate lower as the calculated difference is larger.

In step S303, the controller 11 extracts the condition candidate with a high evaluation from among the plurality of condition candidates based on the evaluation result. In one example, when calculating the evaluation result as an evaluation value, the controller 11 may compare each condition candidate with a threshold value and extract the condition candidate with a higher evaluation value than the threshold value as the condition candidate with a high evaluation. The threshold value may be set as appropriate. In another example, the controller 11 may arrange the condition candidates in descending order of evaluation, and extract a predetermined number or a predetermined ratio of condition candidates from the highly evaluated ones as the condition candidates with high evaluations. The predetermined number or the predetermined ratio may be set as appropriate. In still another example, the controller 11 may extract the condition candidate with the highest evaluation as the condition candidate with a high evaluation.

In step S304, the controller 11 recognizes the extracted condition candidate as the optimum condition. When the recognition is completed, the controller 11 terminates the condition specifying processing of step S111. When the specifying of the optimum condition for each adjustment item in the second manufacturing equipment 25 is completed by the processing of step S111, the controller 11 advances the processing to the next step S112.

<Step S112>

Returning to FIG. 5A and FIG. 5B, in step S112, the controller 11 operates as the candidate presenting part 118 and presents the specified optimum condition. The specific method for presenting the optimum condition may not be particularly limited and may be appropriately selected according to the embodiment as long as the method prompts to collect the additional second learning data 39 according to the specified optimum condition. In one example, the controller 11 may present the optimum condition via the output device 16, the output device of another computer, or the like to prompt the operator to collect the additional second learning data 39 according to the specified optimum condition. In another example, when the quality prediction system 1 and the second manufacturing equipment 25 are connected, the controller 11 may output the specified optimum condition to the second manufacturing equipment 25 and operate the second manufacturing equipment 25 under the specified optimum condition. Thereby, the controller 11 may cause the second manufacturing equipment 25 to collect the additional second learning data 39. When the presentation of the specified optimum condition is completed, the controller 11 advances the processing to the next step S113.

<Step S113>

In step S113, the controller 11 operates as the second data acquisition part 112 and acquires the additional second learning data 39 further collected in the second manufacturing equipment 25. When acquiring the additional second learning data 39, the controller 11 returns the processing to step S106 and executes the processing again from step S106.

Again, in step S106, the controller 11 operates as the machine learning part 115 and implements machine learning of the quality prediction model 5 again further using the acquired additional second learning data 39 in addition to the converted first learning data 31 and the second learning data 35 (and the additional second learning data 37). Again, in step S107, the controller 11 operates as the specifying part 116 and uses the retrained quality prediction model 5 to specify the adjustment amount of each adjustment item of the second manufacturing equipment 25 so that the predicted quality index of the second product satisfies the quality standard. The processing after step S108 is executed in a similar manner.

The above series of processing including acquisition of the additional second learning data 39, relearning of the quality prediction model 5, and specifying of the adjustment amount by the retrained quality prediction model 5 is repeated until it is determined in the processing of step S110 that the quality index of the second product satisfies the quality standard. Thus, by improving the prediction accuracy of the quality prediction model 5, it is possible to increase the possibility of specifying the true optimum adjustment amount of each adjustment item for satisfying the quality standard. If an adjustment amount that satisfies the quality standard cannot be specified even with multiple times of retraining of the quality prediction model 5, there is a possibility that a problem other than the prediction accuracy of the quality prediction model 5 has occurred. Therefore, the controller 11 may terminate the repetition of the series of processing and terminate the processing procedure according to this operation example.

By referring to the optimum condition presented in the processing of step S112, the efficiency of the work of collecting the additional second learning data 39 can be improved, thereby reducing the costs for generating the quality prediction model 5. Therefore, the additional second learning data 39 obtained in the processing of step S113 is preferably collected according to the optimum condition presented in the processing of step S112. However, the condition of each adjustment item for obtaining the additional second learning data 39 is not necessarily determined in this manner. The condition of each adjustment item for obtaining the additional second learning data 39 may be appropriately determined based on, for example, on-site knowledge, like the second learning data (35, 37).

In addition, the processing after execution of the processing of step S113 is not necessarily returned to step S106. In one example, the controller 11 may execute the processing again from step S103. Furthermore, in the processing of step S105, when the second learning data 35 is involved in the conversion of the first learning data 30, the controller 11 may further use the obtained additional second learning data 39 to execute the processing of step S105 again after executing the processing of step S113. When the Frustratingly Easy Domain Adaptation method is employed, the controller 11 converts the additional second learning data 39 in the same manner as the second learning data 35. When the Correlation Alignment method is employed, the controller 11 may add the additional second learning data 39 and then execute the processing of step S105 again.

[Feature]

As described above, in this embodiment, through the processing of step S105, the number of samples of learning data used for generating the quality prediction model 5 can be increased by transferring the first learning data 30 obtained in the first manufacturing equipment 20. Thus, even if the man-hours for experiments performed in the second manufacturing equipment 25 to obtain the second learning data 35 are reduced and suppress the number of samples obtained as the second learning data 35 in the processing of step S102, the learning data of a sufficient number of samples for generating the quality prediction model 5 can be secured. As a result, in the processing of step S106, improvement of the estimating accuracy of the generated trained quality prediction model 5 (that is, suppression of a decrease in estimating accuracy) can be expected. Therefore, according to this embodiment, it is possible to reduce the costs for generating the quality prediction model 5 and suppress a decrease in the estimating accuracy of the generated quality prediction model 5. Further, in the processing of step S107, it is possible to appropriately determine the adjustment amount of the adjustment item of the second manufacturing equipment 25 using the generated quality prediction model 5.

Furthermore, in this embodiment, through the processing of step S103, it is possible to confirm in advance whether the estimating accuracy of the quality prediction model 5 decreases, and prevent the occurrence of defects caused by using a quality prediction model with low accuracy. In addition, when the result of the processing of step S103 indicates that the confirmation result is unacceptable, the additional second learning data 37 is acquired by the processing of step S102 again and the acquired additional second learning data 37 is used for machine learning in step S106, so that improvement of the estimating accuracy of the generated quality prediction model 5 (suppression of a decrease in estimating accuracy) can be expected.

4. Modified example

Although the embodiment of the present invention has been described in detail above, the above description is merely an example of the present invention in every respect. It goes without saying that various modifications or variations can be made without departing from the scope of the present invention. For example, the following changes are possible. Hereinafter, the same reference numerals are used for the same components as those in the above embodiment, and the descriptions for the same points as those in the above embodiment are omitted where appropriate. The following modified examples may be combined as appropriate.

<4.1>

In the above embodiment, the quality prediction system 1 is configured to execute both the generation processing (learning processing) of the quality prediction model 5 and the processing (inference processing) of specifying the adjustment amount of each adjustment item using the trained quality prediction model 5. However, the configuration of the quality prediction system 1 may not be limited to such an example. In another example, the learning processing and the inference processing may be respectively executed by one or more independent computers.

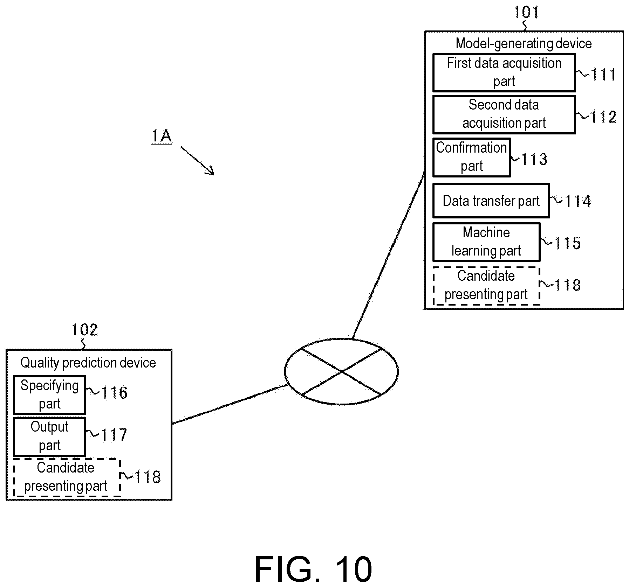

FIG. 10 schematically shows an example of the configuration of a quality prediction system 1A according to this modified example. In this modified example, the quality prediction system 1A includes a model-generating device 101 and a quality prediction device 102. The model-generating device 101 is one or more computers configured to execute the generation processing of the quality prediction model 5. The quality prediction device 102 is one or more computers configured to use the trained quality prediction model 5 to execute the processing of specifying the adjustment amount of each adjustment item.

The hardware configuration of each of the model-generating device 101 and the quality prediction device 102 may be the same as the hardware configuration of the quality prediction system 1A. The model-generating device 101 and the quality prediction device 102 may be directly connected or may be connected via a network. When the model-generating device 101 and the quality prediction device 102 are connected via a network, the type of the network may not be particularly limited and may be appropriately selected from, for example, the Internet, a wireless communication network, a mobile communication network, a telephone network, a dedicated network, and the like. However, the method for exchanging data between the model-generating device 101 and the quality prediction device 102 may not be limited to such an example and may be appropriately selected according to the embodiment. For example, data may be exchanged between the model-generating device 101 and the quality prediction device 102 using a storage medium.

The model-generating device 101 operates as a computer including the first data acquisition part 111, the second data acquisition part 112, the confirmation part 113, the data transfer part 114, and the machine learning part 115 as software modules by executing parts related to the learning processing of the quality prediction program 81. The parts related to the learning processing of the quality prediction program 81 may be called a model generation program, a learning program, and the like. The quality prediction device 102 operates as a computer including the specifying part 116 and the output part 117 as software modules by executing parts related to the inference processing of the quality prediction program 81. The candidate presenting part 118 may be provided in either the model-generating device 101 or the quality prediction device 102.

In this modified example, the model-generating device 101 generates the trained quality prediction model 5 by executing the processing of step S101 to step S106. The generated trained quality prediction model 5 may be provided to the quality prediction device 102 at any timing. The quality prediction device 102 executes the processing of step S108 to step S110. The processing of step S111 and step S112 may be executed by either the model-generating device 101 or the quality prediction device 102. The processing of step S113 is executed by the model-generating device 101. According to this modified example, in the model-generating device 101, it is possible to reduce the costs for generating the quality prediction model 5 and suppress a decrease in the estimating accuracy of the generated quality prediction model 5. In addition, in the quality prediction device 102, it is possible to appropriately determine the adjustment amount of the adjustment item of the second manufacturing equipment 25 using the generated quality prediction model 5.

<4.2>

In the above embodiment, the candidate presenting part 118 may be omitted from the software configuration of the quality prediction system 1. Accordingly, the processing of step S111 and step S112 may be omitted from the processing procedure according to the above embodiment. In one example, even if the processing of step S111 and step S112 is omitted, the quality prediction system 1 may be configured to execute the processing of step S109, step S110, and step S113. In another example, when the processing of step S111 and step S112 are omitted, the processing of step S109. step S110, and step S113 may also be omitted. The same applies to the quality prediction system 1A.

Furthermore, in the processing procedure according to the above embodiment, after the processing of step S103 is executed, the loop processing of step S104 (that is, the processing of step S102 again) may be omitted. In one example, the adjustment item recognized as not contributing to the prediction of the quality index may be excluded from the explanatory variables (that is, input) of the quality prediction model 5. Handling of the adjustment item recognized as not contributing to the prediction of the quality index may be left to the operator. The same applies to the quality prediction system 1A.

In addition, in the above embodiment, the confirmation part 113 may be omitted from the software configuration of the quality prediction system 1. Accordingly, the processing of step S103 and step S104 may be omitted from the processing procedure according to the above embodiment. The same applies to the quality prediction system 1A.

<4.3>

In the above embodiment, the first learning data 30 is transferred to match the second learning data 35 so as to be used for machine learning together with the second learning data 35. However, the method of transfer learning may not be limited to such an example. When the quality prediction model 5 is configured to be able to consider the difference between the domains of the first learning data 30 and the second learning data 35 (environments where each data is acquired), the above conversion of the first learning data 30 may be omitted. That is, in the software configuration of the quality prediction system 1 (and the model-generating device 101), the data transfer part 114 may be omitted. In the above processing procedure, the processing of step S105 may be omitted.

In this case, in step S106, the controller 11 operates as the machine learning part 115 and implements machine learning of the quality prediction model 5 for predicting the quality index of the second product from each adjustment item of the second manufacturing equipment 25 using the acquired first learning data 30 and second learning data 35. The quality prediction model 5 includes kernel functions. The machine learning includes constructing the kernel function for the first learning data 30 by weighting the kernel function for the second learning data 35, and adjusting the value of each parameter of the quality prediction model 5 based on statistical criteria. The kernel function is used to perform nonlinear mapping. The weighting of the kernel function may be appropriately set so that the difference between the domains of the first learning data 30 and the second learning data 35 is taken into consideration. In one example, the kernel function may be a regression equation composed of feature amounts and parameters by nonlinear mapping for each learning data (30, 35). In the machine learning, the controller 11 may configure the nonlinear mapping for the first learning data 30 by weighting the nonlinear mapping for the second learning data 35, and then adjust the parameters and weights based on statistical criteria (for example, maximum likelihood estimation, error minimization, etc.). As the specific method, for example, the kernel function method in Reference 1 above, the method proposed in Reference 3 "B. Cao, S.J. Pan, Y. Zhang, D.Y. Yeung, Q. Yang, 'Adaptive Transfer Learning', in Proceedings of the 24th AAAI Conference on Artificial Intelligence (AAAI-10), pp. 407-412 (2010)" may be employed. Other configurations may be the same as those in the above embodiment.

Reference Signs List

1 ... quality prediction system,
11 ... controller, 12 ... storage part, 13 ... communication interface,
14 ... external interface,
15 ... input device, 16 ... output device, 17 ... drive,
81 ... quality prediction program, 91 ... storage medium,
111 ... first data acquisition part, 112 ... second data acquisition part,
113 ... confirmation part, 114 ... data transfer part,
115 ... machine learning part, 116 ... specifying part,
117 ... output part, 118 ... candidate presenting part,
20 ... first manufacturing equipment, 25 ... second manufacturing equipment,
30 ... first learning data, 35 ... second learning data,
5 ... quality prediction model

**Claims**

1. A quality prediction system, comprising:

   a first data acquisition part configured to acquire first learning data which is collected in first manufacturing equipment and indicates a relationship between each adjustment item of the first manufacturing equipment and a quality index of a first product manufactured by the first manufacturing equipment;
   a second data acquisition part configured to acquire second learning data which is collected in second manufacturing equipment and indicates a relationship between each adjustment item of the second manufacturing equipment and a quality index of a second product manufactured by the second manufacturing equipment;
   a data transfer part configured to convert the acquired first learning data to match the second learning data to implement transfer learning:

      a machine learning part configured to implement machine learning of a quality prediction model for predicting the quality index of the second product from the each adjustment item of the second manufacturing equipment, using the converted first learning data and the second learning data;

a specifying part configured to specify an adjustment amount of the each adjustment item of the second manufacturing equipment so that the predicted quality index of the second product satisfies a quality standard, using the trained quality prediction model; and

an output part configured to output the specified adjustment amount of the each adjustment item of the second manufacturing equipment.

2. The quality prediction system according to claim 1, further comprising:

a confirmation part configured to confirm whether there is an adjustment item that does not contribute to prediction of the quality index among the each adjustment item by statistically analyzing each sample included in the acquired first learning data and the acquired second learning data.

3. The quality prediction system according to claim 2, wherein the second data acquisition part is further configured to acquire additional second learning data, which is collected by experimenting manufacturing of the second product by the second manufacturing equipment under a plurality of conditions with respect to the adjustment item that does not contribute to prediction of the quality index, in response to determining by the confirmation part that there is the adjustment item that does not contribute to prediction of the quality index, and

the machine learning part is configured to implement machine learning of the quality prediction model further using the acquired additional second learning data.

4. The quality prediction system according to claim 2 or 3, wherein statistically analyzing the each sample comprises:

standardizing a value of each adjustment item of each sample included in the first learning data and the second learning data;

calculating variance of the each adjustment item from the standardized value of the each sample; and

recognizing an adjustment item with a calculated value of variance being 0 as the adjustment item that does not contribute to prediction of the quality index.

5. The quality prediction system according to claim 2 or 3, wherein statistically analyzing the each sample comprises:

principal-component analyzing each sample included in the first learning data and the second learning data; and

recognizing an adjustment item corresponding to a principal component whose contribution rate is lower than a threshold value among principal components obtained by principal component analysis as the adjustment item that does not contribute to prediction of the quality index.

6. The quality prediction system according to any one of claims 1 to 5, wherein the data transfer part is configured to convert the acquired first learning data to match the second learning data by a Frustratingly Easy Domain Adaptation method or a Correlation Alignment method.

7. The quality prediction system according to any one of claims 1 to 6, wherein the second data acquisition part is further configured to acquire additional second learning data which is further collected in the second manufacturing equipment in response to the quality index of the second product manufactured by the second manufacturing equipment, in which the adjustment amount of the each adjustment item is set to the adjustment amount specified by the specifying part, not satisfying the quality standard,

the machine learning part is further configured to implement machine learning of the quality prediction model again further using the acquired additional second learning data, and

the specifying part is further configured to specify the adjustment amount of the each adjustment item of the second manufacturing equipment so that the predicted quality index of the second product satisfies the quality standard, using the retrained quality prediction model.

8. The quality prediction system according to claim 7, further comprising a candidate presenting part configured to specify a condition for each adjustment item in the second manufacturing equipment, which obtains a sample that contributes to improving prediction accuracy of the quality prediction model for the first learning data and the second learning data, according to a predetermined evaluation standard, and present the specified condition.

9. The quality prediction system according to any one of claims 1 to 8, wherein the first manufacturing equipment is a basic production line that serves as a basis for other production lines, and

the second manufacturing equipment is a duplicate production line configured by duplicating the basic production line.

10. The quality prediction system according to any one of claims 1 to 8, wherein the first manufacturing equipment is a production line before making a state change, and

the second manufacturing equipment is a production line after making the state change.

11. The quality prediction system according to any one of claims 1 to 10, wherein the quality prediction model is configured by a neural network, a support vector machine, or a regression model.

12. A model-generating device, comprising:

a first data acquisition part configured to acquire first learning data which is collected in first manufacturing equipment and indicates a relationship between each adjustment item of the first manufacturing equipment and a quality index of a first product manufactured by the first manufacturing equipment;

a second data acquisition part configured to acquire second learning data which is collected in second manufacturing equipment and indicates a relationship between each adjustment item of the second manufacturing equipment and a quality index of a second product manufactured by the second manufacturing equipment;

a data transfer part configured to convert the acquired first learning data to match the second learning data to implement transfer learning; and

a machine learning part configured to implement machine learning of a quality prediction model for predicting the quality index of the second product from the each adjustment item of the second manufacturing equipment, using the converted first learning data and the second learning data.

13. A quality prediction method for a computer to execute:

acquiring first learning data which is collected in first manufacturing equipment and indicates a relationship between each adjustment item of the first manufacturing equipment and a quality index of a first product manufactured by the first manufacturing equipment;

acquiring second learning data which is collected in second manufacturing equipment and indicates a relationship between each adjustment item of the second manufacturing equipment and a quality index of a second product manufactured by the second manufacturing equipment;

converting the acquired first learning data to match the second learning data to implement transfer learning;

implementing machine learning of a quality prediction model for predicting the quality index of the second product from the each adjustment item of the second manufacturing equipment, using the converted first learning data and the second learning data;

specifying an adjustment amount of the each adjustment item of the second manufacturing equipment so that the predicted quality index of the second product satisfies a quality standard, using the trained quality prediction model; and

outputting the specified adjustment amount of the each adjustment item of the second manufacturing equipment.

14. A quality prediction program for a computer to execute:

acquiring first learning data which is collected in first manufacturing equipment and indicates a relationship between each adjustment item of the first manufacturing equipment and a quality index of a first product manufactured by the first manufacturing equipment;

acquiring second learning data which is collected in second manufacturing equipment and indicates a relationship between each adjustment item of the second manufacturing equipment and a quality index of a second product manufactured by the second manufacturing equipment;

converting the acquired first learning data to match the second learning data to implement transfer learning;

implementing machine learning of a quality prediction model for predicting the quality index of the second product from the each adjustment item of the second manufacturing equipment, using the converted first learning data and the second learning data;

specifying an adjustment amount of the each adjustment item of the second manufacturing equipment so that the predicted quality index of the second product satisfies a quality standard, using the trained quality prediction model; and

outputting the specified adjustment amount of the each adjustment item of the second manufacturing equipment.

15. A quality prediction system, comprising:

a first data acquisition part configured to acquire first learning data which is collected in first manufacturing equipment and indicates a relationship between each adjustment item of the first manufacturing equipment and a quality index of a first product manufactured by the first manufacturing equipment;

a second data acquisition part configured to acquire second learning data which is collected in second manufacturing equipment and indicates a relationship between each adjustment item of the second manufacturing equipment and a quality index of a second product manufactured by the second manufacturing equipment;

a machine learning part configured to implement machine learning of a quality prediction model for predicting the quality index of the second product from the each adjustment item of the second manufacturing equipment, using the acquired first learning data and the acquired second learning data;

a specifying part configured to specify an adjustment amount of the each adjustment item of the second manufacturing equipment so that the predicted quality index of the second product satisfies a quality standard, using the trained quality prediction model; and

an output part configured to output the specified adjustment amount of the each adjustment item of the second manufacturing equipment,

wherein the quality prediction model comprises a kernel function, and

the machine learning comprises constructing a kernel function for the first learning data by weighting a kernel function for the second learning data, and adjusting a value of each parameter of the quality prediction model based on statistical criteria.

FIG. 1

FIG. 2

Quality prediction system

| First data acquisition part ~111 | Second data acquisition part ~112 | Confirmation part ~113 |

| Data transfer part ~114 | Machine learning part ~115 | Specifying part ~116 |

| Output part ~117 | Candidate presenting part ~118 |

30

First learning data → First learning data (31)

Machine learning →

Quality prediction model (5)

125

Learning result data

35 ~ Second learning data

+

37 ~ Second learning data

39 ~ Second learning data

Quality prediction model (5) → Specify the adjustment amount

Present a condition ← Not satisfy the quality standard

## FIG. 3

Adjustment item          Quality index

| CPM | TempA | TempB | Pos | ArmDeg | Strength |
|---|---|---|---|---|---|
| 30 | 165 | 130 | 14.6 | 158 | 43.6 |
| 30 | 165 | 130 | 14.6 | 158 | 49.6 |
| 30 | 165 | 130 | 14.6 | 158 | 27.7 |
| 90 | 165 | 150 | 9.8 | 158 | 0.8 |
| 90 | 165 | 150 | 9.8 | 158 | 1.8 |
| 90 | 165 | 150 | 9.8 | 158 | 2.1 |
| 30 | 200 | 130 | 9.8 | 150 | 60.5 |
| 30 | 200 | 130 | 9.8 | 150 | 49.1 |
| 30 | 200 | 130 | 9.8 | 150 | 52.4 |
| ... | ... | ... | ... | ... | ... |

~30(35,37,39)

## FIG. 4

Start

S101 — Acquire the first learning data

S102 — Acquire the second learning data

S103 — Confirm whether there is an adjustment item that does not contribute to the prediction by statistically analyzing the first learning data and the second learning data

S104 — Is the confirmation result acceptable?                    No

Yes

S105 — Convert the first learning data to match the second learning data

B

S106 — Implement machine learning of the quality prediction model using the converted first learning data and the second learning data

S107 — Specify the adjustment amount of each adjustment item of the second manufacturing equipment so that the predicted quality index satisfies the quality standard, using the trained quality prediction model

A

# FIG. 5A

S108 — Output the specified adjustment amount of each adjustment item

S109 — Acquire the result of evaluating the quality index of the second product manufactured by the second manufacturing equipment set to the specified adjustment amount

S110 — Is the quality standard satisfied?

Yes

No

S111 — Specify the condition of each adjustment item for obtaining the sample that contributes to improving the prediction accuracy

S112 — Present the specified condition

S113 — Acquire the additional second learning data

A

B

End

FIG. 5B

FIG. 6A

FIG. 6B

FIG. 7

Condition specifying
processing start

S301 — Generate a plurality of condition candidates within the adjustment range of each adjustment item

S302 — Evaluate each condition candidate according to the predetermined evaluation standard

S303 — Extract the condition candidate with a high evaluation from among the plurality of condition candidates

S304 — Recognize the extracted condition candidate as the optimum condition

Condition specifying
processing end

# FIG. 8

$x2$

Condition
candidate

$x1$

# FIG. 9

101

Model-generating device

First data acquisition
part ~111

Second data
acquisition part ~112

Confirmation
part ~113

Data transfer part ~114

Machine
learning part ~115

Candidate
presenting part ~118

1A

102

Quality prediction device

Specifying
part ~116

Output
part ~117

Candidate
presenting part ~118

FIG. 10

## INTERNATIONAL SEARCH REPORT

| International application No. |
| --- |
| **PCT/JP2021/033721** |

**A. CLASSIFICATION OF SUBJECT MATTER**

*G05B 19/418*(2006.01)i; *G06Q 50/04*(2012.01)i
FI: G05B19/418 Z; G06Q50/04

According to International Patent Classification (IPC) or to both national classification and IPC

**B. FIELDS SEARCHED**

Minimum documentation searched (classification system followed by classification symbols)

G05B19/418; G06Q50/04

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2010-286880 A (SHARP CORP) 24 December 2010 (2010-12-24) paragraphs [0030], [0059]-[0089], fig. 1 | 1-3, 5-15 |
| A | | 4 |
| Y | JP 2020-86784 A (HITACHI LTD) 04 June 2020 (2020-06-04) paragraphs [0005]-[0009], [0014]-[0054], fig. 1-4 | 1-3, 5-15 |
| A | | 4 |
| Y | WO 2020/194534 A1 (TOSHIBA MITSUBISHI-ELECTRIC INDUSTRIAL SYSTEMS CORPORATION) 01 October 2020 (2020-10-01) paragraphs [0086]-[0089] | 1-3, 5-14 |
| Y | JP 2012-220978 A (SHARP CORP) 12 November 2012 (2012-11-12) paragraphs [0026], [0084]-[0085] | 2-3, 5 |
| Y | JP 2013-143009 A (HITACHI LTD) 22 July 2013 (2013-07-22) paragraphs [0036]-[0051] | 15 |

☐ Further documents are listed in the continuation of Box C.    ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **17 November 2021** | **30 November 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2021/033721**

| Patent document cited in search report | | | Publication date (day/month/year) | Patent family member(s) | Publication date (day/month/year) |
|---|---|---|---|---|---|
| JP | 2010-286880 | A | 24 December 2010 | (Family: none) | |
| JP | 2020-86784 | A | 04 June 2020 | US 2020/0159197 A1 paragraphs [0008]-[0012], [0036]-[0076], fig. 1-4 | |
| WO | 2020/194534 | A1 | 01 October 2020 | EP 3764184 A1 paragraphs [0105]-[0108] | |
| JP | 2012-220978 | A | 12 November 2012 | WO 2012/137775 A1 paragraphs [0026], [0084]-[0085] | |
| JP | 2013-143009 | A | 22 July 2013 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006344200 A

**Non-patent literature cited in the description**

- **H. DAUME III.** Frustratingly Easy Domain Adaptation. *Proceedings of the 45tt, Annual Meeting of the Association of Computational Linguistics,* 2007, 256-263
- **B. SUN ; J. FENG ; K. SAENKO.** Return of Frustratingly Easy Domain Adaptation. *Proceedings of 30th AAAI Conference on Artificial Intelligence,* 2016, 2058-2065

- **B. CAO ; S.J. PAN ; Y. ZHANG ; D.Y. YEUNG ; Q. YANG.** Adaptive Transfer Learning. *Proceedings of the 24th AAAI Conference on Artificial Intelligence (AAAI-10),* 2010, 407-412